# EUROPÄISCHE PATENTANMELDUNG

(11) **EP 1 118 265 A1**
(43) Veröffentlichungstag der Anmeldung: **25.07.2001**
(21) Anmeldenummer: 00100905.9
(22) Anmeldetag: 18.01.2000
(51) Int. Cl.: A01G 17/18

(54) **Verfahren zum Versiegeln von Oberflächen, insbesondere von Holzstämmen**

(71) Anmelder: Tils, Peter, 52355 Düren (DE)
(72) Erfinder:
(74) Vertreter: Paul, Dieter-Alfred, Dipl.-Ing.

(57) **Zusammenfassung**

Die Erfindung betrifft ein Verfahren zum Versiegeln von Oberflächen, insbesondere von Holzstämmen, welches dadurch gekennzeichnet ist, daß auf die Oberfläche ein Kunststoff in flüssiger Form aufgebracht wird, der nach Härtung einen die Oberfläche bedeckenden Kunststoffilm bildet.

## Beschreibung

Die vorliegende Erfindung betrifft ein Verfahren zum Versiegeln von Oberflächen und befaßt sich insbesondere mit der Versiegelung und dem Schutz von durch Havarie gebrochenen Bäumen und sonstigen Holzstämmen.

Der Schutz von gebrochenen Holzstämmen erfolgt derzeit in der Weise, daß die Holzstämme zu einer Sammelstelle transportiert werden, wo sie durch Aufsprühen von Wasser naß bzw. feucht gehalten werden. Die Feuchtigkeit bildet einen Oberflächenschutz gegen z.B. Borkenkäfer. Der Aufwand, das Holz über einen längeren Zeitraum feucht zu halten, ist jedoch außerordentlich hoch. Außerdem besteht ein zeitliches Problem, weil das Holz bis zum Monat Mai, wenn der Borkenkäfer aktiv wird, gegen Borkenkäferbefall geschützt werden muß.

Eine Aufgabe der vorliegenden Erfindung besteht somit darin, ein Verfahren anzugeben, mit dem es auf einfache Weise möglich ist, Oberflächen zu versiegeln und insbesondere Baumstämme gegen den Befall von Borkenkäfern zu schützen.

Diese Aufgabe ist erfindungsgemäß dadurch gelöst, daß auf die Oberfläche ein Kunststoff in flüssiger Form aufgebracht wird, der nach Härtung einen die Oberfläche bedekkenden Kunststoffilm bildet. Der Erfindung liegt somit die Überlegung zugrunde, Oberflächen durch Aufbringung eines Kunststoffilms bzw. einer Kunststoffschicht, die vorzugsweise elastisch ist, zu versiegeln und auf diese Weise insbesondere Baumstämme gegen den Befall mit Borkenkäfern zu schützen.

Je nach Anwendungsfall können unterschiedliche Kunststoffe verwendet werden, mit denen die Oberfläche dann anforderungsgerecht, d.h. luftdicht, wasserdicht etc. versiegelt werden kann. Insbesondere ist vorgesehen, daß ein biologisch abbaubarer Kunststoff in flüssiger Form verwendet wird.

Dem Kunststoff können noch weitere Stoffe zugemischt sein. Beispielsweise kann dem Kunststoff Schwefel beigemischt sein, um Ungeziefer fernzuhalten, oder Haftmittel, um die Haftung des Kunststoffilms an der Oberfläche zu verbessern. Auch kann der Kunststoff einen Farbstoff enthalten, durch den beispielsweise die Art der versiegelten Baumstämme gekennzeichnet werden kann.

Beim Einsatz von biologisch abbaubarem Kunststoff kann der Kunststoff auch Enzyme enthalten, welche den Zersetzungsprozeß des Kunststoffes steuern. Des weiteren kann auch ein Kunststoff verwendet werden, der Härtebildner für den Kunststoff, Pflanzenschutzmittel oder Sauerstoffbildner enthält. Auch kann der Kunststoff biologisch abbaubare Füllstoffe enthalten.

Zur Aufbringung des flüssigen Kunststoffes können Technologien verwendet werden, die heute zur Begrünung und Bepflanzung von großen, schwer zugänglichen Oberflächen eingesetzt werden. Auch können Handsprühgeräte eingesetzt werden.

## Patentansprüche

1. Verfahren zum Versiegeln von Oberflächen, insbesondere von Holzstämmen, **dadurch gekennzeichnet**, daß auf die Oberfläche ein Kunststoff in flüssiger Form aufgebracht wird, der nach Härtung einen die Oberfläche bedeckenden Kunststoffilm bildet.

2. Verfahren nach Anspruch 1, **dadurch gekennzeichnet**, daß ein biologisch abbaubarer Kunststoff in flüssiger Form verwendet wird.

3. Verfahren nach einem der vorherigen Ansprüche, **dadurch gekennzeichnet**, daß dem Kunststoff eine Farbe zur Kennzeichnung beigemischt wird.

4. Verfahren nach einem der vorherigen Ansprüche, **dadurch gekennzeichnet**, daß ein Kunststoff verwendet wird, dem ein Härtebildner beigemischt ist.

5. Verfahren nach einem der vorherigen Ansprüche, **dadurch gekennzeichnet**, daß ein Kunststoff verwendet wird, der Pflanzenschutzmittel enthält.

6. Verfahren nach einem der vorherigen Ansprüche, **dadurch gekennzeichnet**, daß ein Kunststoff verwendet wird, der einen Sauerstoffbildner enthält.

7. Verfahren nach einem der vorherigen Ansprüche, **dadurch gekennzeichnet**, daß ein Kunststoff verwendet wird, der biologisch abbaubare Füllstoffe enthält.

8. Verfahren nach einem der vorherigen Ansprüche, **dadurch gekennzeichnet**, daß ein Kunststoff verwendet wird, der Enzyme enthält, die den biologischen Abbauprozeß des Kunststoffes steuern.

9. Verfahren nach einem der vorherigen Ansprüche, **dadurch gekennzeichnet**, daß der flüssige Kunststoff auf die Oberfläche aufgesprüht wird.
